# EUROPÄISCHE PATENTSCHRIFT

(11) **EP 2 483 833 B1**
(45) Veröffentlichungstag und Bekanntmachung des Hinweises auf die Patenterteilung: **13.04.2016**
(21) Anmeldenummer: 10765597.9
(22) Anmeldetag: 24.09.2010
(51) Int. Cl.: G06K 7/12

(54) **VERFAHREN UND VORRICHTUNG ZUR ERKENNUNG VON AUF VERPACKUNGEN AUFGEBRACHTEN INFORMATIONEN**
METHOD AND DEVICE FOR DETECTING INFORMATION APPLIED TO PACKAGES
PROCÉDÉ ET DISPOSITIF PERMETTANT D'IDENTIFIER DES INFORMATIONS APPLIQUÉES SUR DES EMBALLAGES

(30) Priorität: 29.09.2009 DE 102009044124
(43) Veröffentlichungstag der Anmeldung: 08.08.2012
(73) Patentinhaber: Pharmacontrol Electronic GmbH, 64673 Zwingenberg (DE)
(72) Erfinder: DICKFELD, Dirk, 64665 Alsbach-Hähnlein (DE)
(74) Vertreter: Mettler-Toledo
(86) Internationale Anmeldenummer: PCT/EP2010/064112
(87) Internationale Veröffentlichungsnummer: WO 2011/039106

(56) Entgegenhaltungen:
- CA-A1- 2 375 577
- US-A1- 2005 211 914

## Beschreibung

Die Erfindung betrifft ein Verfahren zur Erkennung von auf Verpackungen aufgebrachten Informationen.

Insbesondere im Pharmabereich besteht das Bedürfnis, pharmazeutische Produkte anhand von Informationen, die auf einer das Produkt umgebenden Verpackung angebracht sind, eindeutig identifizieren zu können. Zu diesem Zweck werden regelmäßig auf einer Stirnseite einer Verpackungsschachtel relevante Informationen wie beispielsweise eine Produktnummer, eine Chargennummer, ein Verfallsdatum und gegebenenfalls eine das einzelne Produkt identifizierende Nummer aufgedruckt. Durch eine Erfassung der aufgedruckten Informationen und deren Auswertung kann jede einzelne Verpackung und damit auch das darin befindliche Produkt von dem herstellenden Unternehmen über die Vertriebswege bis hin zu einem Endverbraucher nachverfolgt werden. Auf diese Weise können beispielsweise Arzneimittelfälschungen leichter erkannt und deren Verwendung durch Endverbraucher vermieden werden.

Es sind automatische Informationserfassungssysteme bekannt, welche Abbilder der die Informationen enthaltenden Verpackungsbereiche erzeugen können, um die darin enthaltenen Informationen anschließend auswerten können. Derartige Systeme weisen oftmals eine Kamera oder eine andere bildgebende Einrichtung auf, die ein Abbild erzeugt und an eine geeignete, oftmals digitale Auswerteeinrichtung überträgt.

Das Dokument CA 2 375 577 A1 ist ein Beispiel des Stands der Technik.

Allerdings werden zunehmend sowohl einzelne Faltschachteln als auch insbesondere Sammelgebinde, die mehrere Faltschachteln umfassen, mit einer transparenten Folie ummantelt, gegebenenfalls zu einer Einheit verbunden und während des Transports bis zum Verkauf an den Endkunden geschützt. Durch die transparente Folie, oftmals eine Cellophan-Folie, wird die damit umwickelte Verpackung nicht blickdicht abgedeckt. Die auf der Verpackung aufgedruckten Informationen können durch die transparente Folie hindurch erkannt und ausgewertet werden.

Es hat sich jedoch herausgestellt, dass die bislang aus der Praxis bekannten automatisierbaren Erkennungsverfahren die auf der Verpackung aufgebrachten Informationen nicht zuverlässig erkennen und auswerten können, wenn der die Informationen aufweisende Verpackungsbereich mit Cellophan umhüllt ist. Zum Einen treten oftmals unerwünschte Spiegelungen und Reflektionen auf, die durch die umhüllende Cellophan-Folie verursacht oder zumindest begünstigt werden und eine automatisierte Auswertung von Kameraaufnahmen erschweren. Zum Anderen liegt die Cellophan-Folie nicht immer vollständig eben auf der Verpackungsoberfläche auf und kann gegebenenfalls Falten und Wellen aufweisen, die zusätzliche Reflexionen erzeugen und ein Abbild des darunter befindlichen Verpackungsbereichs verzerren können.

Es ist aus der Praxis bekannt, von dem die Informationen aufweisenden Verpackungsbereich zeitlich versetzt mehrere Bilder aufzunehmen, wobei die Beleuchtung aus verschiedenen Richtungen erfolgt und der störenden Einfluss von Verzerrungen und Reflektionen durch einen Vergleich der mehreren Aufnahmen reduziert werden kann. Die Erzeugung mehrerer Kameraaufnahmen mit unterschiedlicher Beleuchtung und die anschließend erforderliche Bildverarbeitung sind jedoch aufwändig und kostenintensiv.

Es ist ebenfalls aus der Praxis bekannt, zur Beleuchtung des die Informationen aufweisenden Verpackungsbereichs polarisiertes Licht zu verwenden und die mit polarisiertem Licht erzeugten Kameraaufnahmen auszuwerten. Es hat sich jedoch gezeigt, dass in vielen Fällen die Cellophan-Folie die Polarisierung des Lichts beeinflussen kann, so dass die mit dem polarisierten Licht erzeugten Kameraaufnahmen und insbesondere deren Auswertungen zusätzlich gestört und beeinträchtigt werden.

Es wird deshalb als eine Aufgabe der vorliegenden Erfindung angesehen, ein Verfahren zur Erkennung von auf Verpackungen aufgebrachten Informationen so auszugestalten, dass auch Informationen auf Verpackungsbereichen, die mit einer transparenten Folie umhüllt sind, möglichst zuverlässig automatisiert erkannt und ausgewertet werden können.

Diese Aufgabe wird erfindungsgemäß dadurch gelöst, dass ein die Informationen aufweisender Verpackungsbereich mit ultraviolettem Licht (UV-Licht, bzw. UV-Strahlung) beleuchtet wird und die von diesem Verpackungsbereich ausgehende Lichtemission mit einer bildgebenden Einrichtung erfasst und ausgewertet wird, die unempfindlich gegenüber UV-Licht ist. Durch die Beleuchtung mit UV-Strahlung wird eine lumineszierende Oberfläche des Verpackungsbereichs angeregt und emittiert sichtbares Licht, üblicherweise Licht in einem blauen oder grünen Spektralbereich. Die UV-Strahlung kann die transparente Folie weitgehend ungehindert durchdringen und die darunter befindliche Oberfläche des Verpackungsbereichs zur Lumineszenz anregen. Die weitestgehend homogen angeregte Emission des Lumineszenzlichtes wird in den mit Information bedruckten Bereichen stark gemindert oder vollständig abgedeckt, so dass die aufgedruckten Informationen dunkle Bereiche in dem lumineszierenden Verpackungsbereich darstellen, die mit der bildgebenden Einrichtung erfasst und ausgewertet werden können.

Von der transparenten Folie oder der darunter befindlichen Oberfläche des Verpackungsbereichs reflektierte Anteil der UV-Strahlung wird dagegen von der bildgebenden Einrichtung nicht erfasst und kann deshalb die Erkennung der Informationen, beziehungsweise deren Auswertung nicht stören und beeinträchtigen.

Das erfindungsgemäße Verfahren setzt eine lumineszierende Oberflächenbeschichtung des die Informationen aufweisenden Verpackungsbereichs der Verpackung voraus. Dies ist im Pharmabereich insbesondere bei pharmazeutischen Verpackungen weitestgehend der Fall, da nahezu ausschließlich Verpackungen mit einer weißen, homogenen, nicht lackierten Karton-Oberfläche verwendet werden, wobei die weiße Farbgebung mit optischen Aufhellern, +beziehungsweise Weißmachern verstärkt wird, die regelmäßig fluoreszierende Substanzen enthalten. Um die Lumineszenzemission zu erhöhen kann vorgesehen sein, dass die Oberfläche des Verpackungsbereichs oder dessen Beschichtung einen Mindestgehalt an fluoreszierenden oder phosphoreszierenden Stoffen enthalten muss. Es ist ebenso denkbar, dass vor dem Aufdrucken der Informationen eine zusätzliche großflächige Beschichtung mit lumineszenzerzeugenden oder lumineszenzfördernden Stoffen erfolgt. Ebenfalls kann vorgesehen sein, dass die Information mit einer hellen Farbe auf einen dunklen Untergrund aufgedruckt wird, wobei die helle Farbe lumineszenzerzeugende Inhaltsstoffe enthält.

Die umhüllende transparente Folie sollte sowohl für sichtbares Licht als auch für UV-Strahlung weitgehend durchlässig sein. Dies ist bei den üblicherweise verwendeten Folien und insbesondere bei einer Cellophan-Folie regelmäßig der Fall. Das erfindungsgemäße Verfahren kann mit nahezu allen durchsichtigen Folien durchgeführt werden, sofern eine ausreichende Durchlässigkeit für einen nutzbaren Spektralbereich der UV-Strahlung gegeben ist.

Da die bildgebende Einrichtung das UV-Licht nicht erfasst, werden Reflexionen und/oder Streuungseffekte durch die Beleuchtung des Verpackungsbereichs mit UV-Licht weitestgehend ausgeblendet und können die Erkennung der Informationen nicht stören oder merklich beeinträchtigen.

Gemäß einer Ausgestaltung des Erfindungsgedankens ist vorgesehen, dass die bildgebende Einrichtung mindestens eine vollständige Abbildung des Verpackungsbereichs erzeugt, die anschließend ausgewertet wird. Auf diese Weise können in kürzester Zeit die vollständigen Informationen einer Verpackung oder eines Sammelgebindes mit mehreren darin enthaltenen Verpackungen erfasst werden. Die Erkennung und Auswertung der auf diese Weise erzeugten Abbildung kann zu einem beliebigen späteren Zeitpunkt erfolgen.

Gemäß einer anderen Ausgestaltung des Erfindungsgedankens ist vorgesehen, dass die bildgebende Einrichtung eine sich quer über den Verpackungsbereich erstreckende Bildzeile kontinuierlich erfasst, die anschließend ausgewertet wird. Durch eine kontinuierliche Bildzeilenerkennung, die mit handelsüblichen Zeilenscannern oder dergleichen einfach und kostengünstig realisierbar ist, kann der die Informationen aufweisende Verpackungsbereich einer sich bewegenden Verpackung erfasst und anschließend ausgewertet werden. Die einzelnen Verpackungen oder Sammelgebinde können an der bildgebenden Einrichtung kontinuierlich vorbei transportiert werden. Die Erkennung der aufgedruckten Information kann auf diese Weise während des Herstellungsvorgangs, bzw. des Verpackungsvorgangs durchgeführt werden, ohne dass jede einzelne Verpackung im Bereich der bildgebenden Einrichtung stillstehend positioniert werden muss.

Die Erfindung betrifft auch eine Vorrichtung zur Erkennung von auf Verpackungen aufgebrachten Informationen.

Die Vorrichtung weist erfindungsgemäß eine UV-Strahlung emittierende Lichtquelle zum Beleuchten eines die Informationen aufweisenden Verpackungsbereichs und eine bildgebende Einrichtung zur Erfassung der von diesem Verpackungsbereich ausgehenden Lichtemissionen auf, wobei die bildgebende Einrichtung unempfindlich gegen die UV-Strahlung ist. Die UV-Lichtquelle kann beispielsweise neben der bildgebenden Einrichtung im Abstand zu dem die Informationen aufweisenden Verpackungsbereich angeordnet sein, so dass bei einer geeigneten Ausrichtung der UV-Lichtquelle ausschließlich der Verpackungsbereich beleuchtet wird und kein UV-Licht direkt in die bildgebende Einrichtung gelangen kann. Ein Übersprechen der Beleuchtung in die bildgebende Einrichtung wird dadurch weitestgehend verhindert. Das von der Lichtquelle ausgestrahlte UV-Licht regt die Oberfläche des möglichst homogen beleuchteten Verpackungsbereichs zur Lumineszenz an. Ausschließlich das von dem Verpackungsbereich ausgestrahlte Lumineszenzlicht und nicht die von den UV-Lichtquellen ausgestrahlte und gegebenenfalls reflektierte oder gestreute UV-Strahlung wird von der bildgebenden Einrichtung erfasst. Die aufgedruckten Informationen führen zu einer Abschattung der Lumineszenzemissionen in den Bereichen mit Informationsaufdruck in dem Verpackungsbereich und können mit geeigneten Auswerteverfahren erkannt und ausgewertet werden.

Vorzugsweise ist vorgesehen, dass die bildgebende Einrichtung eine Kamera ist. Insbesondere eine digitale Kamera kann eine Abbildung des die Informationen aufweisenden Verpackungsbereichs in ausreichender Auflösung und in kürzester Zeit erzeugen und diese Abbildung in digitaler Form zur Verfügung stellen, so dass die erzeugten digitalen Daten abgespeichert und anschließend gegebenenfalls aufbereitet und ausgewertet werden können.

Gemäß einer besonders vorteilhaften Ausgestaltung des Erfindungsgedankens ist vorgesehen, dass die bildgebende Einrichtung einen für UV-Strahlung undurchlässigen Filter aufweist. Mit dem UV-undurchlässigen Filter, der unmittelbar vor der Kamera, beziehungsweise der bildgebenden Einrichtung angeordnet ist, wird von der UV-Lichtquelle ausgestrahltes und gegebenenfalls von der Verpackungsoberfläche reflektiertes UV-Licht herausgefiltert, so dass es nicht von der bildgebenden Einrichtung erfasst werden kann. Auf diese Weise können handelsübliche Kameras oder auch CCD-Sensoren verwendet werden, die ohne Verwendung eines UV-undurchlässigen Filters durch gegebenenfalls eindringendes UV-Licht gestört würden.

Es ist ebenso denkbar, das die bildgebende Einrichtung weitere Filtereinrichtungen aufweist, so dass im Wesentlichen ausschließlich das durch die UV-Beleuchtung angeregte Lumineszenzlicht von der bildgebenden Einrichtungen erfasst und für die anschließende Auswertung herangezogen wird.

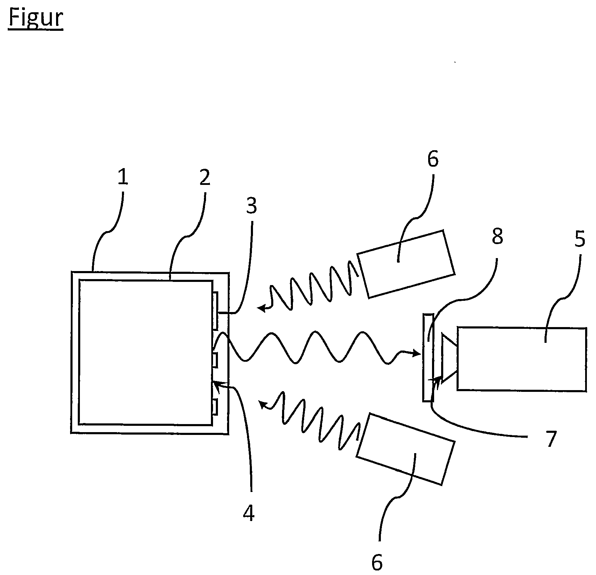

Nachfolgend wird ein Ausführungsbeispiel näher erläutert, das in der Zeichnung dargestellt ist.

Eine mit einer Cellophan-Folie 1 einlagig oder mehrlagig umhüllte Faltschachtel 2, die eine Verpackung für ein pharmazeutisches Produkt bildet, weist einen mit einem Informationsaufdruck 3 versehenen Verpackungsbereich 4 auf. Eine Kamera 5 ist in einem Abstand zu dem Verpackungsbereich 4 so angeordnet und ausgerichtet, dass die Kamera 5 eine vollständige Abbildung des die Informationen aufweisenden Verpackungsbereichs 4 erzeugen kann.

Seitlich neben der Kamera 5 sind zwei UV-Strahlung emittierende Lichtquellen 6 angeordnet, mit welchen der Verpackungsbereich 4 im Wesentlichen homogen mit UV-Strahlung beleuchtet wird. Die UV-Strahlung dringt durch die Cellophan-Folie 1 hindurch und regt eine fluoreszierende Beschichtung der Faltschachtel 2 im Bereich des Verpackungsbereichs 4 zur Lumineszenz, beziehungsweise insbesondere zur Fluoreszenz an. Das von dem Verpackungsbereich 4 in Richtung der Kamera 5 emittierte Lumineszenzlicht wird von der Kamera 5 erfasst.

Durch einen unmittelbar vor einer Lichteintrittsöffnung 7 der Kamera 5 angeordneten UV-undurchlässigen Filter 8 wird sichergestellt, dass keinerlei UV-Strahlung durch die Lichteintrittsöffnung 7 in die Kamera 5 eindringen und die Erzeugung und Auswertung einer Abbildung des Verpackungsbereichs 4 der Faltschachtel 2 beeinträchtigen kann. Störende Reflektionen werden auf diese Weise vollständig vermieden.

Diejenigen Bereiche des Verpackungsbereichs 4, die einen üblicherweise schwarzen oder dunklen Informationsaufdruck 3 aufweisen, emittieren bei UV-Bestrahlung erheblich weniger oder nahezu kein Lumineszenzlicht und werden deshalb von der Kamera 5 als dunkle Bereiche in dem lumineszierenden Verpackungsbereich 4 wahrgenommen. Die Kamera 5 erzeugt eine Abbildung der durch die UV-Strahlung angeregten Lumineszenzemissionen, die anschließend mit geeigneten Auswerteverfahren und -einrichtungen weiterverarbeitet und ausgewertet werden kann.

## Patentansprüche

1. Verfahren zur automatisierten Erkennung von auf Verpackungen aufgebrachten Informationen, welche Verpackung mit einer transparenten Folie umhüllt ist, wobei ein die Informationen aufweisender Verpackungsbereich (4) lumineszenserzeugende Substanzen aufweist, und wobei der die Informationen aufweisende Verpackungsbereich (4) mit UV-Strahlung beleuchtet wird und die von diesem Verpackungsbereich (4) ausgehende Lichtemission mit einer bildgebenden Einrichtung, die unempfindlich gegenüber UV-Licht ist, erfasst und anschließend ausgewertet wird.

2. Verfahren nach Anspruch 1, **dadurch gekennzeichnet, dass** die bildgebende Einrichtung einen für UV-Strahlung undurchlässigen Filter (8) aufweist.

3. Verfahren nach Anspruch 1 oder 2, **dadurch gekennzeichnet, dass** die bildgebende Einrichtung mindestens eine vollständige Abbildung des Verpackungsbereichs (4) erzeugt, die anschließend ausgewertet wird.

4. Verfahren nach Anspruch 1 oder 2, **dadurch gekennzeichnet, dass** die bildgebende Einrichtung eine sich quer über den Verpackungsbereich (4) erstreckende Bildzeile kontinuierlich erfasst, die anschließend ausgewertet wird.

5. Verfahren nach einem der Ansprüche 1 bis 4, **dadurch gekennzeichnet, dass** die Oberfläche des Verpackungsbereichs oder dessen Beschichtung einen Mindestgehalt an fluoreszierenden oder phosphoreszierenden Stoffen enthält.

6. Verfahren nach einem der Ansprüche 1 bis 4, **dadurch gekennzeichnet, dass** vor dem Aufdrucken der Informationen eine zusätzliche Beschichtung die Oberfläche des Verpackungsbereichs mit lumineszenzerzeugenden oder lumineszenzfördernden Stoffen erfolgt.

7. Verfahren nach einem der Ansprüche 1 bis 4, **dadurch gekennzeichnet, dass** die Informationen mit einer hellen Farbe auf einen dunklen Untergrund aufgedruckt wird, wobei die helle Farbe lumineszenzerzeugende Inhaltsstoffe enthält.

8. Verfahren nach einem der Ansprüche 1 bis 7, **dadurch gekennzeichnet, dass** der Verpackungsbereich 4 im Wesentlichen homogen mit UV-Strahlung beleuchtet wird.

9. Vorrichtung zur automatisierten Erkennung von auf Verpackungen aufgebrachten Informationen, welche Verpackung mit einer transparenten Folie umhüllt ist, wobei ein die Informationen aufweisender Verpackungsbereich (4) lumineszenserzeugende Substanzen aufweist, und wobei die Vorrichtung mindestens eine UV-Strahlung emittierende Lichtquelle (6) zum Beleuchten eines die Informationen aufweisenden Verpackungsbereichs (4) und eine bildgebende Einrichtung zur Erfassung der von diesem Verpackungsbereich (4) ausgehenden Lichtemissionen aufweist, wobei die bildgebende Einrichtung unempfindlich gegenüber UV-Strahlung ist.

10. Vorrichtung nach Anspruch 9, **dadurch gekennzeichnet, dass** die bildgebende Einrichtung eine Kamera (5) oder auch CCD-Sensoren, aufweist.

11. Vorrichtung nach Anspruch 9 oder 10, **dadurch gekennzeichnet, dass** die bildgebende Einrichtung einen für UV-Strahlung undurchlässigen Filter (8) aufweist.

12. Vorrichtung nach Anspruch 11, **dadurch gekennzeichnet, dass** der für UV-Strahlung undurchlässigen Filter (8) unmittelbar vor einer Lichteintrittsöffnung (7) der Kamera (5) angeordnet ist.

13. Vorrichtung nach einem der Ansprüche 9 bis 12, **dadurch gekennzeichnet, dass** diese zwei UV-Strahlung emittierende Lichtquellen (6) aufweist.

14. Vorrichtung nach einem der Ansprüche 9 bis 13, **dadurch gekennzeichnet, dass** die UV-Lichtquelle neben der bildgebenden Einrichtung im Abstand zu dem die Informationen aufweisenden Verpackungsbereich angeordnet ist, so dass bei einer geeigneten Ausrichtung der UV- Strahlung emittierende Lichtquelle ausschließlich der Verpackungsbereich beleuchtet wird und kein UV-Licht direkt in die bildgebende Einrichtung gelangen kann.

15. Vorrichtung nach einem der Ansprüche 9 bis 14, **dadurch gekennzeichnet, dass** die die Verpackung umhüllende transparente Folie eine einlagige oder mehrlagige Cellophan-Folie (1) ist.

## Claims

1. Method for the automated recognition of information displayed on product packaging, wherein the packaging is encased with a transparent foil, wherein a packaging portion (4) carrying the information contains luminescence-generating substances, wherein the packaging portion (4) carrying the information is illuminated with UV radiation, wherein the light emission originating from the packaging portion (4) is captured by an imaging device that is insensitive to UV light, and said light emission is subsequently analysed.

2. Method according to claim 1, **characterized in that** the imaging device comprises a filter (8) that is impervious to UV radiation.

3. Method according to claim 1 or 2, **characterized in that** the imaging device generates at least a complete image of the packaging portion (4), wherein said complete image is subsequently analysed.

4. Method according to claim 1 or 2, **characterized in that** the imaging device captures a continuous image line extending transversely across the packaging portion (4) and said image line is subsequently analysed.

5. Method according to one of the claims 1 to 4, **characterized in that** the surface of the packaging portion or the coating of the latter contains a minimum proportion of fluorescent or phosphorescent substances.

6. Method according to one of the claims 1 to 4, **characterized in that** prior to printing the information onto the packaging an additional coating with luminescence-generating or luminescence-promoting substances is applied to the surface of the packaging portion.

7. Method according to one of the claims 1 to 4, **characterized in that** the information is printed in a light colour onto a dark background, wherein the light colour contains luminescence-generating ingredients.

8. Method according to one of the claims 1 to 7, **characterized in that** the packaging portion (4) is illuminated substantially homogeneously with UV radiation.

9. Device for the automated recognition of information displayed on product packaging, wherein the packaging is encased with a transparent foil, wherein a packaging portion (4) carrying the information contains luminescence-generating substances, and wherein the device comprises at least one light source (6) emitting UV radiation to illuminate a packaging portion (4) carrying the information and further comprises an imaging device to capture the light emission originating from said packaging portion (4), wherein the imaging device is insensitive to UV light.

10. Device according to claim 9, **characterized in that** the imaging device comprises a camera (5) or also CCD sensors.

11. Device according to claim 9 or 10, **characterized in that** the imaging device comprises a filter (8) that is impervious to UV radiation.

12. Device according to claim 11, **characterized in that** the UV-impervious filter (8) is arranged immediately in front of a light ingress opening (7) of the camera (5).

13. Device according to one of the claims 9 to 12, **characterized in that** the device comprises two light sources (6) emitting UV radiation.

14. Device according to one of the claims 9 to 13, **characterized in that** the UV light source is arranged next to the imaging device at a distance from the packaging portion carrying the information, so that with a suitable orientation of the UV radiation-emitting light source, only the packaging portion is illuminated and no UV light can enter directly into the imaging device.

15. Device according to one of the claims 9 to 14, **characterized in that** the transparent foil in which the packaging is encased is a single-layer or multi-layer cellophane foil (1).

## Revendications

1. Procédé pour la détection automatisée d'informations imprimées sur des emballages, ledit emballage étant enveloppé dans un film transparent, dans lequel une région d'emballage (4) présentant les informations comporte des substances produisant une luminescence, et dans lequel la région d'emballage (4) présentant les informations est éclairée avec un rayonnement UV, et l'émission de lumière partant de cette région d'emballage (4) est détectée avec un dispositif d'imagerie insensible à la lumière UV, puis évaluée consécutivement.

2. Procédé selon la revendication 1, **caractérisé en ce que** le dispositif d'imagerie présente un filtre (8) opaque au rayonnement UV.

3. Procédé selon la revendication 1 ou 2, **caractérisé en ce que** le dispositif d'imagerie produit au moins une image complète de la région d'emballage (4), laquelle est évaluée consécutivement.

4. Procédé selon la revendication 1 ou 2, **caractérisé en ce que** le dispositif d'imagerie détecte en continu une ligne d'image s'étendant de façon transversale sur la région d'emballage (4), laquelle est évaluée consécutivement.

5. Procédé selon l'une des revendications 1 à 4, **caractérisé en ce que** la surface supérieure de la région d'emballage ou le revêtement de celle-ci contient une quantité minimale de matières fluorescentes ou phosphorescentes.

6. Procédé selon l'une des revendications 1 à 4, **caractérisé en ce qu'**avant l'impression des informations, un revêtement supplémentaire avec des matières produisant une luminescence ou favorisant une luminescence est appliqué sur la surface supérieure de la région d'emballage.

7. Procédé selon l'une des revendications 1 à 4, **caractérisé en ce que** les informations sont imprimées dans une couleur claire sur un fond foncé, la couleur claire contenant des composants produisant une luminescence.

8. Procédé selon l'une des revendications 1 à 7, **caractérisé en ce que** la région d'emballage (4) est éclairée de façon essentiellement homogène avec un rayonnement UV.

9. Dispositif pour la détection automatisée d'informations imprimées sur des emballages, ledit emballage étant enveloppé dans un film transparent, dans lequel une région d'emballage (4) présentant les informations comporte des substances produisant une luminescence, et dans lequel le dispositif présente au moins une source de lumière (6) émettant un rayonnement UV pour éclairer une région d'emballage (4) présentant les informations, et un dispositif d'imagerie destiné à détecter les émissions de lumière partant de cette région d'emballage (4), le dispositif d'imagerie étant insensible au rayonnement UV.

10. Dispositif selon la revendication 9, **caractérisé en ce que** le dispositif d'imagerie comporte une caméra (5) ou également des capteurs CCD.

11. Dispositif selon la revendication 9 ou 10, **caractérisé en ce que** le dispositif d'imagerie comporte un filtre (8) opaque au rayonnement UV.

12. Dispositif selon la revendication 11, **caractérisé en ce que** le filtre (8) opaque au rayonnement UV est disposé directement devant une ouverture d'entrée de lumière (7) de la caméra (5).

13. Dispositif selon l'une des revendications 9 à 12, **caractérisé en ce que** celui-ci comporte deux sources de lumière (6) émettant un rayonnement UV.

14. Dispositif selon l'une des revendications 9 à 13, **caractérisé en ce que** la source de lumière est agencée à côté du dispositif d'imagerie, à distance de la région d'emballage présentant les informations, de telle façon que lorsque la source de lumière émettant le rayonnement UV est orientée de façon appropriée, seule la région d'emballage est éclairée et aucune lumière UV ne peut atteindre directement le dispositif d'imagerie.

15. Dispositif selon l'une des revendications 9 à 14, **caractérisé en ce que** le film transparent enveloppant l'emballage est un film de cellophane (1) à une ou plusieurs couches.
